# EUROPEAN PATENT SPECIFICATION

(11) **EP 1 951 070 B1**
(45) Date of publication and mention of the grant of the patent: **08.12.2010**
(21) Application number: 06828849.7
(22) Date of filing: 23.10.2006
(51) Int. Cl.: A23L 1/24

(54) **A MAYONNAISE PRODUCT AND A PROCESS FOR PREPARING IT**
MAYONNAISEPRODUKT UND VERFAHREN ZU SEINER HERSTELLUNG
PRODUIT DE TYPE MAYONNAISE ET PROCÉDÉ SERVANT À PRÉPARER CELUI-CI

(30) Priority: 14.11.2005 EP 05077593
(43) Date of publication of application: 06.08.2008
(73) Proprietor: Unilever N.V., 3013 AL Rotterdam (NL); Unilever PLC, London EC4Y 0DY (GB)
(72) Inventor: BODOR, Janos, NL-3133 AT Vlaardingen (NL); PETTEN, Arjan, Merijn, NL-3133 AT Vlaardingen (NL)
(74) Representative: Rots, Maria Johanna Francisca
(86) International application number: PCT/EP2006/010172
(87) International publication number: WO 2007/054199

(56) References cited:
- EP-A- 0 032 833
- EP-A- 1 452 098
- US-A- 6 113 954
- US-A1- 2004 018 292
- DATABASE WPI Section Ch, Week 199822 Derwent Publications Ltd., London, GB; Class D13, AN 1998-249240 XP002367340 & RU 2 092 081 C1 (FAR E COMMERCIAL INST) 10 October 1997 (1997-10-10)

## Description

The invention relates to a mayonnaise product, in particular to an egg-free mayonnaise product, and to a process for preparing it.

Conventionally, mayonnaise type products contain egg yolk or whole egg to emulsify the oil and obtain a stable product that has a continuous aqueous phase and a dispersed oil phase, even though the oil content of the product can be 60 or 70 wt% or even as high as 80-85 wt%. Although egg has excellent functional properties, it also has some disadvantages. It has high cholesterol content. It suffers from microbial complications. Because of this, vulnerable groups of the population are often advised to avoid the consumption of raw egg and of products including raw egg. Although the microbial profile can be improved by selective heat treatment, such treatment may adversely affect the functional properties of the egg. The shelf life of functional egg components tends to be short. Moreover, there is a group of people with serious allergenic reaction to egg protein. Furthermore, some vegetarians, e.g. vegans, do not wish to consume products that contain egg or egg components.

These and similar considerations have led to a search for egg extenders and egg replacers. Many compositions have been proposed for this purpose. However, in particular in products like mayonnaise, the functional contribution of egg is difficult to replace.

US 4,182,779 discloses an egg yolk extender that is based on defatted soy flour, grain flour, edible food grade oil and lecithin. In products that are sensitive to the presence of egg yolk, about 45-55% can be replaced. A salad dressing is disclosed that includes 80.5 % soybean oil, 1.74 % egg yolk solids and 1.74 % of the egg yolk extender. The egg yolk extender consists of:

| | |
|---|---|
| 53 % | defatted soy flour |
| 21.5% | short patent wheat flour |
| 13 % | soy oil |
| 6 % | lecithin |
| 3 % | glycerin |
| 2 % | Tween 60 ^{®} (polysorbate 60, which is a polyoxyethylene sorbitan monostearate) |
| 1.5 % | carrageenan |

US 4,302,474 and US 4,293,574 describe the preparation of refined soybean protein by solubilizing an alcohol-denatured soybean protein with protease and separating insoluble materials. The refined soybean protein obtained is used as an emulsifier instead of eggs in mayonnaise-like foods.

US 6,849,282 discloses starch-based salad dressing that contains soy protein as a replacer for part or all of the egg yolk or whole egg. The salad dressings contain 4 or 5 % starch, soy protein and optionally egg yolk or whole egg protein. The oil constitutes about 1/4^{th}-1/3^{rd} of the salad dressings.

US 4,103,038 discloses an egg replacer composition based on whey protein derived by ultrafiltration, vegetable oil and lecithin. It may include further emulsifiers, e.g. Tween^{®}. A mayonnaise product is exemplified that comprises the egg replacer composition, water, acid, salt, spices, sugar, mustard and salad oil.

US 3,892,873 describes the preparation of emulsified oil dressings with an emulsifying agent other than egg yolk. The emulsifying agent is serum protein obtained from milk. The serum protein is treated so that a predetermined level of the protein is denatured. If the oil content of the dressing is 50-70%, the serum protein must be treated to effect denaturation of at least 70 wt% of the serum protein. If the oil content is 70-80%, the serum protein must have less than 20% denatured protein. Then special low heat handling and drying techniques are required to maintain the level of denatured protein below about 20%.

WO 93/25086 describes a partly denatured whey protein product with a protein content of 65-95 wt% on dry matter, a protein denaturation level of 55-80% and a mean particles size in the range of 30-60 micron. The protein product can be used instead of egg yolk in the preparation of dressing like products.

EP 1,452,098 discloses a liquid egg replacer composition that can be used in stead of eggs to prepare mayonnaise-like dressings. The liquid egg replacer is based on a combination of soy protein, milk protein and egg white protein. The PDI is at least 60%.

EP 788,747 describes a mayonnaise-like product comprising 55-85% fat, at least 0.1% milk protein or vegetable protein, at least 1% sugar and 0.5% salt and 0.1-20% vinegar. The protein has been denatured at a degree between 70 and 80%.

We have now found that an improved mayonnaise product can be obtained with an overall improved combination of properties. It is free of egg protein. It can have improved emulsion stability, application properties, mouthfeel, texture and / or flavour release properties. Most of the above-described approaches for making egg-free mayonnaise products require tight control of the properties of the protein source used to replace egg yolk. The degree of denaturation and/or the particle size need to be controlled within rather strict limits. Special equipment may be required to achieve these properties while there is a significant risk of producing product that does not meet the requirements. Our product can be produced using protein sources to replace the egg protein that are readily available from a range of suppliers. No special equipment is required. The protein composition in the mayonnaise product provides a versatile and robust system with a high oil uptake capacity. A stable emulsion can readily be obtained that is not very sensitive to pH or heat treatment of the aqueous phase and that allows pasteurization. The product can have a smooth mouthfeel, a good emulsion stability and structure breakdown and a well-balanced flavour profile over a wide formulation window of oil content and acidity.

Accordingly, the present invention provides a mayonnaise product that has a continuous aqueous phase and a dispersed oil phase, which product comprises 25-87 wt% of oil, which product contains, expressed on the non-oil content of the product, a combined amount of soy protein and whey protein of 0.5-15 wt%, wherein the weight ratio soy protein : whey protein is between 10:1 and 1:4, and which product is free of egg protein.

The invention also provides a process for making the present mayonnaise product which includes the steps of
1. preparing an aqueous dispersion including soy protein and whey protein,
2. preparing an oil-in-water emulsion that has an oil content of at least 25 wt% by including oil in the aqueous dispersion, and
3. including acid in the oil-in-water emulsion.

The material used to provide the soy protein in the composition preferably is soy protein concentrate or soy protein isolate, soy protein isolate being preferred. Such soy protein materials typically have a protein content of about 80 wt% or more. Examples of suitable soy protein materials are Pro Fam^{®} 974, Pro Fam^{®} 892 and Pro Fam^{®} 891, which are available from ADM, the Netherlands, and Newpro^{®} TS, which is available from Lucas Meyer bv, the Netherlands. The whey protein source is preferably whey protein concentrate or whey protein isolate. For example, whey protein concentrate powder prepared by the partial removal of lactose via crystallization and whey protein isolate prepared via ultrafiltration of whey can be used. Fractionated whey protein, e.g. a beta-lactoglobulin-rich fraction may be used in stead of or in combination with more common whey protein materials. Examples of suitable whey protein materials are Hiprotal^{®} 835, a whey protein concentrate from Friesland Foods Domo, the Netherlands, Lacprodan 80 and Lacprodan 70 from Arla Foods Ingredients, Denmark and Ultra Whey 99, a whey protein isolate from Lithos Food BV, the Netherlands. The whey protein source used preferably has a protein content of at least 25 wt%, more preferably of 30-90 wt%.

The weight ratio soy protein : whey protein is preferably between 7:1 and 1:2, especially between 5:1 and 1:1. The combined amount of soy protein and whey protein expressed on the non-oil content of the product is preferably 1-10 wt%, especially 2-7 wt%.

Our product is free of egg protein. As described above, there are several disadvantages associated with the use of egg, in particular egg yolk. However, we found that for the preparation of mayonnaise product that is free of egg yolk, egg white protein may have an adverse effect on the oil uptake capacity of the system, on the stability of the dispersion obtained and on the sensoric properties of the product. For this reason also, our product is free of egg protein, also of egg white protein. The expression "free of egg protein" means that the product does not contain egg protein in an amount such that a typical consumer would notice the difference compared with a product that does not contain egg protein at all. Preferably, if any egg protein is present at all, it is present in an amount of less than 0.5 wt%, more preferably less than 0.1 wt%, especially less than 0.04 wt%, expressed on the non-oil content of the mayonnaise product. Most preferably the product does not contain any egg protein at all. Such product can safely be consumed by people with specific allergic reaction to egg protein. It is further preferred for the product not to include any materials originating from egg yolk. In a particularly preferred embodiment no constituents originating from eggs are deliberately included in the product. Accordingly the product is most preferably free of constituents originating from eggs.

Our mayonnaise product includes 25-87 wt%, preferably 50-85 wt% of oil. Preferably the oil is vegetable oil. Tallow or lard or fat from other animal origin is preferably not deliberately included although small amounts of animal fat, e.g. originating from the whey protein source can be tolerated. The oil used in the mayonnaise product is preferably liquid at ambient temperature, more preferably at 15°C, especially at 10°C. The solid fat content at 10°C is preferably less than 3 wt%, more preferably it is less than 1 wt%. The solid fat content can suitably be measured as the N-value by means of NMR. Preferred types of oil are sunflower oil, peanut oil, olive oil, safflower oil, soybean oil, low erucic acid rapeseed oil, corn or maize oil, cottonseed oil, winterized versions thereof and combinations of two or more thereof. The use of sunflower oil is particularly preferred. The amount of oil in the product is more preferably 60-84 wt%, especially 70-83 wt%. Our invention is particularly beneficial for products with relatively high oil content. In such products the functional contribution of egg is the most difficult to replace.

However, we were surprised to find that with our invention also in products with relatively low oil content, e.g. 40 wt%, mayonnaise-like consistency and mouthfeel could be obtained. Notably, we found that also the products with relatively low oil content showed surprising ease of dispersion in the mouth and fast flavour release.

It is preferred to include in the mayonnaise product an emulsifier. A preferred emulsifier is lecithin, in particular vegetable lecithin. Examples of suitable lecithin materials that can be included are soy lecithin and sunflower lecithin. Another preferred emulsifier that can be included in stead of or in combination with lecithin is polyoxyethylene derivative of fatty acid partial ester of sorbitol anhydride. For example, Tween^{®} 60 can beneficially be included in the product. The amount of emulsifier included is preferably 0.005-1 wt%, especially 0.01-0.5 wt% of the product.

To finetune the rheology of the product it can be advantageous to include some thickening agent in the product. A preferred thickener is xanthan gum. Other thickeners that can be used are for example carrageenan, guar gum and locust been gum. The amount of thickening agent employed is preferably 0.01-0.5 wt%. The product may also contain some starch. For example some Ultratex 4 ^{®} (available from National Starch, UK) may be included. However, in order not to dominate the texture of the product, if starch is used the amount should preferably not be high. Preferably, any starch included is not more than 3wt% of the product: More preferably the amount of starch in the product is at most 2 wt%. Most preferably the product does not contain starch at all.

Preferably our mayonnaise product comprises acid. Preferably the acid is acetic acid, citric acid, lactic acid or a combination of two or more thereof. In a particularly preferred embodiment, the product includes one or more natural sources of such acid, particularly lemon juice, vinegar, fermented whey and / or yogurt. The pH of the product is preferably between 3.0 and 5.0. The product may further include water and also ingredients e.g. to enhance the taste or flavour. For example, the product may include salt, sugar, mustard, spices, taste enhancers and the like.

The viscosity of our product at 20°C is preferably 1-20 Pa.s, especially 2-15 Pa.s.

Our product can suitably be prepared using conventional mayonnaise preparation methods except that the egg or egg yolk is replaced with an aqueous phase comprising the soy protein and whey protein. However, it is preferred to prepare the product with the present process. It is not essential to include all the oil in step 2 of the process, provided that the oil content of the emulsion is at least 25 wt%, preferably at least 50 wt%. Additional oil may be included before or after including acid in step 3. However, preferably all oil to be included in the product is included in step 2 of the process. Preferably the acid used is acetic acid, citric acid, lactic acid or a combination of two or more thereof. More preferably, a natural source of such acid is used, for example, lemon juice, vinegar, fermented whey and / or yogurt.

Preferably after step 3 of the process the composition is passed through a shearing device. The composition thus subjected to the shear regime preferably includes the entire composition to be incorporated in the product, except for possible macroscopic pieces e.g. of fruit or vegetable that are intended to be present as recognizable pieces in the end product. Such pieces are suitably included after the composition has been passed through the shearing device. The shearing device preferably has a relatively short residence time. It can e.g. be a high pressure valve. Preferably, the shearing device is a colloid mill. The use of a shearing device with a very short residence time, e.g. a pressure valve, can be beneficial for compositions with low oil contents. For products with higher oil content, preferably a colloid mill is used. In case of very high oil contents, e.g. above about 80 wt%, it can be beneficial to apply a colloid mill with some recirculation, e.g. as in the Fryma Delmix ^{®} mayonnaise equipment. Subjecting the composition to shear after step 3 of the process contributes to the emulsion stability of the product and its shelflife. It may also raise the viscosity and improve the organoleptic properties of the product.

Throughout this specification all parts, percentages and ratios are by weight unless otherwise indicated.

The term "comprising" is meant not to be limiting to any subsequently stated elements but rather to encompass non-specified elements of major or minor functional importance. In other words the listed steps, elements or options need not be exhaustive. Whenever the word "including" or "having" is used, this term is meant to be equivalent to "comprising" as defined above.

### Example 1

A series of mayonnaise products having a continuous aqueous phase and a dispersed oil phase was prepared using protein premixes having the composition given in table 1.

**Table 1**

| Ingredients | WPC premix pbw (= wt%) | SPI premix pbw (wt%) |
|---|---|---|
| WPC * | 15.23 | - |
| SPI * | - | 5.91 (6.52) |
| Sugar | 10.65 | 10.65 (11.74) |
| Salt | 6.39 | 6.39 (7.05) |
| Water | 63.90 | 63.90 (70.47) |
| Tween * | 0.05 | 0. 05 (0.055) |
| Lecithin * | 0.05 | 0.05 (0.055) |
| Sunflower oil | 3.73 | 3.73 (4.11) |

| | | |
|---|---|---|
| * WPC is Hiprotal^{®} 835, a whey protein concentrate having a protein content of 35 wt% and a PDI of 100% at 20°C, supplied by Friesland Foods Domo, the Netherlands. SPI is Pro Fam^{®} 974, a soy protein isolate having a protein content of 90 wt% and a PDI of 75% at 20°C, supplied by ADM, the Netherlands. Tween is Tween^{®} 60V supplied by Kerry Bioscience, the Netherlands. Lecithin is Topcithin^{®} supplied by Degussa, the Netherlands. | | |

The Tween and Lecithin were dissolved in the oil. Then this oil phase and all other ingredients of the premix were combined in a Stephan mixer and mixed for 5 minutes. Two sets of trials were done, with and without heat treatment of the protein premix. For the trials with heat treatment, the mixing was done at 85°C and the protein premix was cooled down thereafter in a water bath to ambient temperature. For the trials without heat treatment, the mixing in the Stephan mixer was done at ambient temperature. The mayonnaise products were prepared using the recipes shown in Table 2.

**Table 2**

| Samples | C1a | C1b | E1 |
|---|---|---|---|
| Ingredients | pbw (= wt%) | pbw (= wt%) | pbw (= wt%) |
| SPI premix | 17.03 | - | 8.52 |
| WPC premix | - | 18.78 | 9.39 |
| Sunflower oil | 74.30 | 74.30 | 74.30 |
| Water | 6.17 | 4.42 | 5.30 |
| Vinegar ** | 2.50 | 2.50 | 2.50 |

| Protein content | Wt% * | Wt% * | Wt% * |
|---|---|---|---|
| Soy protein | 4.0 | - | 2.0 |
| Whey protein | - | 4.0 | 2.0 |

| | | | |
|---|---|---|---|
| * Expressed on the non-oil content of the product ** The vinegar comprised 12 wt% of acetic acid in water | | | |

For the samples E1, the indicated amounts of protein premix were combined. For all samples the process then proceeded as follows. The remainder of the water was added to the protein premix. The oil was added under continuous whisking. Then the vinegar was added while whisking. The emulsion was then put in a Presto-Mill colloid mill and emulsified at speed 7, opening 8. The resulting mayonnaise product was filled into glass jars. It was stored at about 5°C in a refrigerator.

To evaluate the presence of loose oil, a strip of blue paper is lightly pressed onto a lump of sample. If little or no discoloration of the paper happens, the sample has no loose oil. Development of a big dark spot on the paper reflects a high amount of loose oil (oil causes a darker spot on paper than does water).

The emulsification of the samples that contained soy protein only (C1a) was not good. The samples contained a lot of loose oil. This was the case irrespective of whether the protein premix had been heat-treated. For the other samples the emulsification was acceptable. There was a bit of loose oil in sample E1 with heat treatment.

The viscosity of the samples was measured before and directly after the emulsification in the colloid mill and after 24 hour storage. The viscosity measurement was done directly in a sample jar at 20°C using a Viscotester 345060 from Extech Instruments, using spindle 2. The results are shown in Table 3.

**Table 3**

| Sample | Heat treated? | Before colloid mill (Pa.s) | After colloid mill (Pa.s) | After 24 hours storage (Pa.s) |
|---|---|---|---|---|
| C1a | Y | 2.5 | 3.3 | 6.6 |
| | N | 1.6 | 0.7 | 0.6 |
| C1b | Y | 2.4 | 5.0 | 8.6 |
| | N | 0.6 | 15.0 | 22.5 |
| E1 | Y | 3.0 | 2.2 | 5.6 |
| | N | 1.0 | 6.6 | 10.8 |

Sample C1a (soy protein only) without heat treatment was judged to be too thin. Sample C1b (whey protein only) without heat treatment was too thick. Its mouthfeel and handling properties were not good either. Only the samples E1 gave good viscosity irrespective of whether they had been subjected to heat treatment.

### Example 2

A mayonnaise product was produced similarly as sample E1 without heat treatment except that the recipe comprised 11.35 pbw SPI premix, 6.26 pbw WPC premix, 74.30 pbw oil, 5.59 pbw water and 2.50 pbw vinegar. (The units pbw equal wt %). The protein content in the sample was 4.0 wt% expressed on the non-oil contents of the product. The wt ratio of soy protein and whey protein was 2:1.

The emulsification of the sample was acceptable; it contained some loose oil. The viscosity (at 20°C, measured as in Example 1) was good: 1.0 Pa.s before the colloid mill treatment, 4.5 Pa.s directly after the colloid mill treatment and 7.3 Pa.s after 24 hours storage in the refrigerator.

### Example 3

An egg replacer concentrate ("ERC") was prepared from the composition shown in table 4 (ERC X120).

**Table 4**

| Ingredients for ERC X120 | pbw (=wt%) |
|---|---|
| Oil phase | |
| Sunflower oil | 30.87 |
| Lecithin * | 0.3 |
| Tween * | 0.3 |
| Beta-carotene | 0.01 |
| Alfa tocopherol | 0.007 |
| Butter flavour | 0.01 |

| Powder phase | |
|---|---|
| Soy protein isolate * | 35.4 |
| Whey protein concentrate * | 30.0 |
| Pectin | 0.43 |
| Citric acid | 0.05 |
| Ascorbic acid | 0.04 |
| Glycin | 0.02 |
| Salt | 0.64 |
| Egg powder flavour | 0.25 |
| Creamer ** | 1.7 |

| | |
|---|---|
| * The SPI, the WPC, the Tween and the Lecithin were the same materials as described in example 1 ** The creamer was DP644A from DMV International, the Netherlands | |

The ingredients of each of the phases were mixed and the two mixtures were then combined and mixed for 5 minutes in a Hobart mixer to provide the egg replacer concentrate.

Mayonnaise products were prepared using this egg replacer concentrate, and for comparison using real egg yolk, with the recipes given in Table 5.

**Table 5**

| Ingredients in pbw (= wt %) | Sample E3 | Sample C3 |
|---|---|---|
| Egg yolk * | - | 8.0 |
| ERC X120 | 2.0 | - |
| Water | 16.18 | 10.87 |
| Sugar | 2.0 | 2.0 |
| Salt | 1.2 | 0.56 |
| Xanthan gum | 0.05 | - |
| EDTA | 0.008 | 0.008 |
| Sunflower oil | 75 | 75 |
| Beta-carotene (1%) | 0.002 | 0.002 |
| Vinegar (12 wt%) | 2.5 | 2.5 |
| Mustard | 1.0 | 1.0 |
| Lemon juice | 0.06 | 0.06 |

| | | |
|---|---|---|
| * The egg yolk was pasteurized salted egg yolk having a salt content of 8 wt% supplied by Nive, the Netherlands. | | |

For samples E3, the ERC, sugar, salt, xanthan gum and EDTA were mixed with the water to provide the protein phase. The beta-carotene was mixed with the sunflower oil to provide the oil phase. The lemon juice, mustard and vinegar were combined to provide the acid phase. The oil phase was mixed into the protein phase under continuous whisking to provide an oil-in-water emulsion. The acid phase was then mixed into the composition, the emulsion was passed through a colloid mill and the product was filled in glass jars as described in Example 1. The samples C3 were prepared in the same way except that the protein phase consisted of the egg yolk, sugar, salt, EDTA and water. The samples were stored at 5°C. They were evaluated sensorically after 1 month.

Samples E3 contained 76 wt% oil. They contained 3.5 wt% protein expressed on the non-oil content of the product. The weight ratio of soy protein and whey protein was 3.0:1. The pH was 3.9.

Sample C3 was slightly darker in colour and had a slightly more pronounced egg yolk taste than sample E3. Sample E3 was somewhat shiny, sample C3 looking more dull. Both samples had a good firm texture, sample E3 being more elastic. Both samples had a smooth mouthfeel and a good texture breakdown in the mouth. The taste and flavour profile of both products was good. They were both very good mayonnaise products.

### Example 4

Egg replacer concentrates were prepared from the recipes shown in table 6.

**Table 6**

| Ingredients for sample | ERC X124 | ERC Y108 |
|---|---|---|
| Oil phase | pbw (= wt%) | pbw (= wt%) |
| Sunflower oil | 31.07 | 30.8 |
| Lecithin | 0.3 | 0.34 |
| Beta-carotene | 0.01 | 0.01 |
| Alfa tocopherol | 0.007 | 0.007 |
| Butter flavour | 0.01 | 0.01 |

| Powder phase | | |
|---|---|---|
| Soy protein isolate | 35.4 | 41.7 |
| Egg white protein | - | 18.0 |
| Whey protein concentrate | 30.0 | 5.9 |
| Pectin | 0.43 | 0.43 |
| Citric acid | 0.15 | 0.15 |
| Ascorbic acid | 0.04 | 0.04 |
| Glycin | 0.02 | 0.02 |
| Salt | 0.64 | 0.64 |
| Egg powder flavour | 0.26 | 0.26 |
| Creamer | 1.67 | 1.67 |

The ingredients used were the same as those in example 3. The egg white protein was EAP-R from Belovo, Belgium. It had a protein content of 80 wt%; the PDI was 100% at 20°C. The egg replacer concentrates were prepared using the same process as described in example 3.

Mayonnaise products were prepared with the following protocol:
1. Make a 10% solution of the ERC in water
2. Take 40 g of this solution and add 40 g sunflower oil while mixing with an electric whisk in about 30 s.
3. Measure the viscosity at ambient temperature with the Viscotester 345060 (Extech Instruments) using spindle 2.
4. Mix in further oil using the electric whisk at a rate of about 10 g oil in 10 s, and measure the viscosity after addition of respectively, 40 g, 40 g, 30 g, 30 g, 20 g and 20 g extra sunflower oil.

The samples prepared with the ERC X124 are indicated as E4. The comparative samples prepared with ERC Y108 are indicated as C4. After incorporation of all the oil, the oil content of the products was 85 wt%. The protein content expressed on the non-oil part of the compositions was 4.4 wt% for sample E4 and 5.6 wt% for sample C4. The pH of the solution of the ERC in water was about 6.65. For sample C4, the viscosity was relatively high at all oil contents. At 82 wt% oil, the viscosity immediately after incorporation of the oil, i.e. without passage through a colloid mill and without storage, was already 13 Pa.s. Before the next 20 g of oil could be included, the emulsion broke. No good product could be obtained. The viscosity fell to less than 2 Pa.s at 85 wt% oil inclusion. For sample E4 at 81.8 wt%, the viscosity was about 6 Pa.s. At 83.3 wt% of oil the viscosity was about 7 Pa.s and at 85 wt% oil, it was 9.5 Pa.s.

### Example 5

It was tried to prevent the breakage of the emulsion in the formulation containing egg white protein in sample C4, using Tween^{®}. Accordingly, example 4 was repeated using ERC Y108 with 0.3 pbw Tween^{®} 60V (from Kerry Bioscience, the Netherlands) included in the oil phase, for samples C5a. Instead of ERC X124, ERC X120 described in example 3 and containing 0.3 pbw Tween in the oil phase of the ERC was used for samples E5. The viscosities of samples E5 were practically the same as those of samples E4. Inclusion of the Tween in the samples C5a with egg white protein improved the emulsion stability and reduced the viscosity. However, the viscosity was still high and its development at the end of the oil inclusion showed a discontinuity, suggesting that the emulsion was near collapse: the viscosity was 10 Pa.s at 81.8 wt%, 10.5 Pa.s at 83.3 wt% and about 11 Pa.s at 85 wt%. This increase was clearly less steep than expected in view of the viscosity development at the lower oil contents: about 4.5 Pa.s at 75 wt% oil, about 6.5 Pa.s at 79 wt% oil and about 10 Pa.s at 81.8 wt% oil. After inclusion of all the oil, the samples C5a exhibited a high amount of loose oil. That was much less the case for the samples E5 (and E4) even though they had not been passed through a colloid mill.

As further comparisons samples C5b and C5c were prepared in the same way as samples E5 using ERC X121 and ERC X122, respectively. ERC X121 differed from ERC X120 in that it contained 65.4 pbw (wt %) of SPI and no WPC. ERC X122 differed from ERC X120 in that it contained 65.4 pbw (wt %) of WPC and no SPI. For this set of trials, samples E5 containing ERC X120 were prepared again as well. The results obtained for samples E5 were similar as before. The viscosity at 81.8, 83.3 and 85 wt% were about 6, 7.5 and 8 Pa.s, respectively. The samples C5b containing X121 (soy protein only) had a very high viscosity. The viscosity increase began to show discontinuity around 80 wt% oil in the emulsion. At that stage the viscosity already exceeded 15 Pa.s. The texture of the sample in the mouth was not smooth. The samples C5c containing ERC X122 (whey protein only) were not stable. The emulsion broke before all oil could be included.

### Example 6

The preparation of samples E5 was repeated except that in the ERC 0.34 pbw sodium hydrogen carbonate was included and 0.15 pbw citric acid was used in stead of 0.05 pbw. The amount of sunflower oil in the ERC was 30.43 pbw in stead of 30.87 pbw. The ERC was labeled ERC X106. The product was similar to E5 except that its viscosity was higher at all oil levels. The viscosity at lower oil levels was similar to that of samples C5a but no discontinuity occurred at higher oil content (which had flagged fragile emulsion stability for samples C5a). The viscosity was about 4.5, 7, 10.5, 13 and 14 Pa.s at 75, 79, 81.8, 83.3 and 85 % oil, respectively. No substantial amounts of loose oil were seen in the product after inclusion of all the oil either.

### Example 7

The preparation of samples E5 was repeated except that in the ERC 0.15 pbw of citric acid was used in stead of 0.05 pbw. The pH of the ERC in water was about 6.4 instead of 6.65. The reduction of the pH did not have noticeable effect on the emulsion stability, viscosity or oil uptake capacity of the product.

### Example 8

The preparation of samples E5 was repeated except that a solution of 20 wt% of the ERC in water was used. The resulting product contained 9.0 wt% protein in the non-fat content of the product. The soy : whey protein weight ratio was 3.0:1. As expected, the increased solids in the aqueous phase caused the viscosity to increase notably. However, it did not cause emulsion instability and no loose oil was observed after inclusion of all the oil. The viscosity at 85 wt% oil in the product was about 20 Pa.s.

### Example 9

A series of mayonnaise products was prepared using egg replacer concentrates similar to those used for samples E5 (ERC X120) and C5a (ERC Y108 + Tween) and one that contained whey protein isolate as the sole protein source. The compositions are listed in table 7.

**Table 7**

| Ingredients for sample | ERC X120 | ERC Y108 + Tween | ERC X136 |
|---|---|---|---|
| Oil phase | pbw (= wt%) | pbw (= wt%) | pbw (= wt%) |
| Sunflower oil | 30.9 | 30.9 | 30.9 |
| Lecithin | 0.3 | 0.3 | 0.3 |
| Tween | 0.3 | 0.3 | 0.3 |
| Beta-carotene | 0.01 | 0.01 | 0.01 |
| Alfa tocopherol | 0.007 | 0.007 | 0.007 |
| Butter flavour | 0.01 | 0.01 | 0.01 |

| Powder phase | | | |
|---|---|---|---|
| Soy protein isolate | 35.4 | 41.5 | - |
| Egg white protein | - | 18.0 | - |
| Whey protein concentrate | 30.0 | 5.9 | - |
| Whey protein isolate * | - | - | 65.4 |
| Pectin | 0.43 | 0.43 | 0.43 |
| Citric acid | 0.05 | 0.05 | 0.05 |
| Ascorbic acid | 0.04 | 0.04 | 0.04 |
| Glycin | 0.02 | 0.02 | 0.02 |
| Salt | 0.64 | 0.64 | 0.64 |
| Egg powder flavour | 0.26 | 0.26 | 0.26 |
| Creamer | 1.67 | 1.67 | 1.67 |
| Protein content in ERC | 42.4% | 53.8% | 52.3% |
| ERC in mayonnaise product | 2.12% | 1.67% | 1.72% |
| Protein in mayo. product | 0.90% | 0.90% | 0.90% |

| | | | |
|---|---|---|---|
| * The ingredients used were the same as described in the above examples. The whey protein isolate used was Lacprodan 80 from Arla Foods Ingredients, Denmark. Its protein content was 80% and the PDI was 100% at 20°C. | | | |

The protein content of the ERCs is also listed in Table 7. To obtain mayonnaise products with the same protein content, the amount of ERC used in the recipe of the mayonnaise product was adapted as shown in table 7. The resulting products all contained 0.90 wt% protein. The recipes used to prepare the mayonnaise products are shown in Table 8.

**Table 8**

| Sample | E9 | C9a | C9b |
|---|---|---|---|
| Water phase | Wt% | Wt% | Wt% |
| Water | 16.1 | 16.5 | 16.5 |
| ERC X120 | 2.12 | - | - |
| ERC X136 | - | - | 1.72 |
| ERC Y108 + Tween | - | 1.67 | - |
| Sugar | 2.0 | 2.0 | 2.0 |
| Salt | 1.2 | 1.2 | 1.2 |
| Xanthan gum | 0.05 | 0.05 | 0.05 |
| EDTA | 0.008 | 0.008 | 0.008 |

| Oil phase | | | |
|---|---|---|---|
| Sunflower oil | 75 | 75 | 75 |
| Beta carotene (1%) | 0.002 | 0.002 | 0.002 |

| Acid phase | | | |
|---|---|---|---|
| Vinegar | 2.5 | 2.5 | 2.5 |
| Mustard | 1.0 | 1.0 | 1.0 |
| Lemon juice | 0.06 | 0.06 | 0.06 |

For the preparation of the mayonnaise products the same equipment was used as described in Example 1. The protocol was as follows:
1. Mix the water phase ingredients
2. Mix the oil phase ingredients
3. Mix the acid phase ingredients
4. Under continuous mixing in a Stephan mixer at speed 1, slowly add the oil phase to the water phase.
5. After all the oil has been added, add the acid phase under continuous mixing
6. Measure the pH and the viscosity (as in Example 1)
7. Transfer the emulsion to the colloid mill and emulsify at speed 10, opening 5.
8. Fill the mayonnaise product in glass jars and store at 5°C.
9. After 24 hours storage, measure the pH and the viscosity (as in example 1).

Each product contained 3.7 wt% protein calculated on the non-oil contents of the product. The pH measured before the colloid mill treatment and after one day storage were the same. The results of the pH and viscosity measurements are shown in table 9.

**Table 9**

| Sample | pH | Viscosity before colloid mill (Pa.s) | Viscosity after 24 hrs storage (Pa.s) |
|---|---|---|---|
| E9 | 3.9 | 5.7 | 8.5 |
| C9a | 3.9 | 7.7 | 10.8 |
| C9b | 3.8 | 4.8 | 32.0 |

The samples were assessed after 1 day storage at 5°C. Sample E9 had a creamy colour. Samples C9a and C9b were more pale; their colour was off-white. Sample C9b showed no loose oil. Sample E9 had a little loose oil while sample C9a had a lot of loose oil. Sample E9 appeared to have a very smooth, homogeneous structure. The structure of sample C9b showed some slight inhomogeneity as if it contained some very small particles. The structure of sample C9a was more seriously inhomogeneously. Samples C9a and C9b had both rather brittle, gel-like structures. Sample E9 was more plastic. Sample C9b was also too firm. For usage of the product, it was easy to apply a thin layer of sample E9 or sample C9b on toast. With sample C9a however, this resulted in a crumbly appearance and the product was then very shiny, suggesting emulsion breakdown.

Organoleptically, sample C9a was also unacceptable. It felt crumbly, gel-like in the mouth and the flavour impression of the product was weak and flat. The product did not coat the mouth properly. The panel unanimously rated this sample as very poor. Sample E9 was smooth in the mouth. It coated the mouth easily and gave a rich, balanced and well-rounded flavour impression. The panel unanimously preferred this sample. Sample C9b was in-between the other two products. It did not have such a smooth texture and coated the mouth less easily than sample E9. The texture of C9b as perceived in the mouth was found to be clearly better than C9a. However, the taste and flavour impression of C9b was disappointing. It was flat and not well developed. We hypothesized that while the presence of egg white protein appeared to cause serious emulsion instability, the use of whey protein on its own seemed to give such a strong, fine emulsion that it hampered the sensoric appreciation of the taste and flavour contribution of the oil phase.

### Example 10

Example 3 was repeated except that mayonnaise products with lower oil contents were prepared using the recipes shown in table 10.

**Table 10**

| Ingredients in pbw (=wt%) | Sample E10 | Sample C10 |
|---|---|---|
| Egg yolk * | - | 4.0 |
| ERC X120 | 1.5 | - |
| Water | 49.7 | 47.2 |
| Sugar | 2.0 | 2.0 |
| Salt | 1.2 | 1.2 |
| Xanthan gum | 0.05 | - |
| Starch (Ultratex 4)* | 2.0 | 2.0 |
| EDTA | 0.008 | 0.008 |
| Sunflower oil | 40 | 40 |
| Beta-carotene (1%) | 0.002 | 0.002 |
| Vinegar (12 wt%) | 2.5 | 2.5 |
| Mustard | 1.0 | 1.0 |
| Lemon juice | 0.06 | 0.06 |

| | | |
|---|---|---|
| * The egg yolk was pasteurized (unsalted) egg yolk supplied by Nive, the Netherlands. The Ultratex 4 starch was supplied by National Starch, UK. | | |

Sample E10 contained 41 wt% oil. It contained 1.1 wt% protein expressed on the non-oil content of the product. The weight ratio soy protein : whey protein was 3.0:1. The samples were assessed sensorically after 1 month storage at 5°C. Sample E10 was slightly darker in colour than sample C10. The texture of E10 was somewhat firmer than C10 but both samples were more soft and spreadable than traditional mayonnaise usually is. The egg flavour from sample C10 was a little stronger than from sample E10. Otherwise, the two products had very similar sensoric properties. Both products had a smooth texture and a good mouthfeel. Both coated the mouth well and both gave a well-balanced, rounded taste and flavour impression. Both samples were very good mayonnaise products.

## Claims

1. A mayonnaise product that has a continuous aqueous phase and a dispersed oil phase, which product comprises 25-87 wt% of oil, which product contains, expressed on the non-oil content of the product, a combined amount of soy protein and whey protein of 0.5-15 wt%, wherein the weight ratio soy protein : whey protein is between 10:1 and 1:4, and which product is free of egg protein.

2. A product according to claim 1 wherein the oil has a solid fat content at 10°C of less than 1 wt%.

3. A product according to claim 1 or claim 2 wherein the oil is vegetable oil.

4. A product according to any one of claims 1-3 that comprises 50-85 wt% of oil.

5. A product according to any one of claims 1-4 wherein the weight ratio soy protein : whey protein is between 7:1 and 1:2.

6. A product according to any one of claims 1-5 wherein the combined amount of soy protein and whey protein is 1-10 wt% expressed on the non-oil content of the product.

7. A product according to any one of claims 1-6 that comprises emulsifier.

8. A product according to claim 7 that comprises 0.005-1 wt% of emulsifier.

9. A product according to claim 7 or claim 8 wherein the emulsifier comprises vegetable lecithin.

10. A product according to any one of claims 7-9 wherein the emulsifier comprises polyoxyethylene derivative of fatty acid partial ester of sorbitol anhydride.

11. A product according to any one of claims 1-10 that has a pH between 3.0 and 5.0.

12. A product according to any one of claims 1-11 that comprises 0.01-0.5 wt% thickening agent

13. A product according to any one of claims 1-12 that has a viscosity at 20°C of 1-20 Pa.s.

14. A product according to any one of claims 1-13 that is free of constituents originating from eggs.

15. A process to prepare a mayonnaise product according to any one of claims 1-14 including the steps of
1. preparing an aqueous dispersion including soy protein and whey protein,
2. preparing an oil-in-water emulsion that has an oil content of at least 25 wt% by including oil in the aqueous dispersion, and
3. including acid in the oil-in-water emulsion.

16. A process according to claim 15 wherein the acid is acetic acid, citric acid, lactic acid or a combination of two or more thereof.

17. A process according to claim 15 or claim 16 wherein after step 3 the composition is passed through a shearing device.

18. A process according to any one of claims 15-17 wherein in step 2 an oil-in-water emulsion is prepared that has an oil content of at least 50 wt%.

## Patentansprüche

1. Mayonnaise-Produkt, das eine kontinuierliche wässrige Phase und eine dispergierte Ölphase hat, wobei das Produkt 25-87 Gewichts-% Öl umfasst, wobei das Produkt, ausgedrückt auf der Basis des Nicht-Öl-Gehalts des Produkts, eine kombinierte Menge an Sojaprotein und Molkeprotein von 0,5-15 Gewichts-% enthält, wobei das Gewichtsverhältnis Sojaprotein:Molkeprotein zwischen 10:1 und 1:4 liegt und wobei das Produkt frei von Eiprotein ist.

2. Produkt nach Anspruch 1, wobei das Öl einen Gehalt an festem Fett bei 10 °C von weniger als 1 Gewichts-% hat.

3. Produkt nach Anspruch 1 oder Anspruch 2, wobei das Öl Pflanzenöl ist.

4. Produkt nach einem der Ansprüche 1-3, das 50-85 Gewichts-% Öl umfasst.

5. Produkt nach einem der Ansprüche 1-4, wobei das Gewichtsverhältnis Sojaprotein: Molkeprotein zwischen 7:1 und 1:2 ist.

6. Produkt nach einem der Ansprüche 1-5, wobei die kombinierte Menge an Sojaprotein und Molkeprotein 1-10 Gewichts-%, bezogen auf den Nicht-Öl-Gehalt des Produkts, ist.

7. Produkt nach einem der Ansprüche 1-6, das Emulgator umfasst.

8. Produkt nach Anspruch 7, das 0,005-1 Gewichts-% an Emulgator umfasst.

9. Produkt nach Anspruch 7 oder Anspruch 8, wobei der Emulgator Pflanzenlecithin umfasst.

10. Produkt nach einem der Ansprüche 7-9, wobei der Emulgator ein PolyoxyethylenDerivat von Fettsäurepartialester von Sorbitanhydrid umfasst.

11. Produkt nach einem der Ansprüche 1-10, das einen pH zwischen 3,0 und 5,0 hat.

12. Produkt nach einem der Ansprüche 1-11, das 0,01-0,5 Gewichts-% Verdickungsmittel umfasst.

13. Produkt nach einem der Ansprüche 1-12, das eine Viskosität bei 20 °C von 1-20 Pa.s hat.

14. Produkt nach einem der Ansprüche 1-13, das frei von Bestandteilen ist, die aus Eiern stammen.

15. Verfahren zur Herstellung eines Mayonnaise-Produkts nach einem der Ansprüche 1-14, umfassend die Schritte
1. Herstellen einer wässrigen Dispersion, die Sojaprotein und Molkeprotein umfasst,
2. Herstellen einer Öl-in-Wasser-Emulsion, die einen Ölgehalt von wenigstens 25 Gewichts-% hat, durch Einschließen von Öl in die wässrige Dispersion, und
3. Einschließen von Säure in die Öl-in-Wasser-Emulsion.

16. Verfahren nach Anspruch 15, wobei die Säure Essigsäure, Citronensäure, Milchsäure oder eine Kombination von zwei oder mehr davon ist.

17. Verfahren nach Anspruch 15 oder Anspruch 16, wobei die Zusammensetzung nach Schritt 3 durch eine Schervorrichtung geführt wird.

18. Verfahren nach einem der Ansprüche 15-17, wobei in Schritt 2 eine Öl-in-Wasser-Emulsion hergestellt wird, die einen Ölgehalt von wenigstens 50 Gewichts-% hat.

## Revendications

1. Produit de type mayonnaise comprenant une phase aqueuse continue et une phase huileuse dispersée, ledit produit comprenant de 25 à 87 % en poids d'huile, ledit produit contenant, exprimée sur la teneur non huileuse du produit, une quantité combinée de protéine de soja et de protéine de lactosérum allant de 0,5 à 15 % en poids, le rapport massique protéine de soja/protéine de lactosérum étant compris entre 10:1 et 1:4, ledit produit étant exempt de protéine d'oeuf.

2. Produit selon la revendication 1, selon lequel l'huile comprend une teneur en corps gras solide à 10 °C inférieure à 1 % en poids.

3. Produit selon la revendication 1 ou la revendication 2, selon lequel l'huile est de l'huile végétale.

4. Produit selon l'une quelconque des revendications 1 à 3 comprenant de 50 à 85 % en poids d'huile.

5. Produit selon l'une quelconque des revendications 1 à 4, selon lequel le rapport massique protéine de soja/protéine de lactosérum se situe entre 7:1 et 1:2.

6. Produit selon l'une quelconque des revendications 1 à 5, selon lequel la quantité combinée de protéine de soja et de protéine de lactosérum est de 1 à 10 % en poids, exprimée sur la teneur non huileuse du produit.

7. Produit selon l'une quelconque des revendications 1 à 6 comprenant un émulsifiant.

8. Produit selon la revendication 7 comprenant de 0,005 à 1 % en poids d'émulsifiant.

9. Produit selon la revendication 7 ou la revendication 8, selon lequel l'émulsifiant comprend de la lécithine végétale.

10. Produit selon l'une quelconque des revendications 7 à 9, selon lequel l'émulsifiant comprend un dérivé de polyoxyéthylène d'ester partiel d'acide gras d'anhydride de sorbitol.

11. Produit selon l'une quelconque des revendications 1 à 10 comprenant un pH qui se situe entre 3,0 et 5,0.

12. Produit selon l'une quelconque des revendications 1 à 11 comprenant de 0,01 à 0,5 % en poids d'agent épaississant.

13. Produit selon l'une quelconque des revendications 1 à 12 présentant une viscosité à 20 °C de 1 à 20 Pa.s.

14. Produit selon l'une quelconque des revendications 1 à 13 qui est exempt de composants provenant des oeufs.

15. Procédé de préparation d'un produit de type mayonnaise selon l'une quelconque des revendications 1 à 14 comprenant les étapes suivantes
1. préparation d'une dispersion aqueuse comprenant une protéine de soja et une protéine de lactosérum,
2. préparation d'une émulsion d'huile dans l'eau comprenant une teneur en huile d'au moins 25 % en poids par ajout d'huile dans la dispersion aqueuse, et
3. ajout d'acide dans l'émulsion d'huile dans l'eau.

16. Procédé selon la revendication 15, selon lequel l'acide est de l'acide acétique, de l'acide citrique, de l'acide lactique, ou une combinaison de deux ou plus de deux d'entre eux.

17. Procédé selon la revendication 15 ou la revendication 16, selon lequel, après l'étape 3, la composition est passée dans un dispositif de cisaillement.

18. Procédé selon l'une quelconque des revendications 15 à 17, selon lequel, dans l'étape 2, une émulsion d'huile dans l'eau est préparée, qui comprend une teneur en huile d'au moins 50 % en poids.
